## Europäisches Patentamt

## European Patent Office

## Office européen des brevets

(11) Publication number: **0 142 307**
A1

# (12) EUROPEAN PATENT APPLICATION

(21) Application number: **84307386.7**

(22) Date of filing: **26.10.84**

(51) Int. Cl.⁴: **C 02 F 3/28**

(30) Priority: **26.10.83 GB 8328598**

(43) Date of publication of application:
**22.05.85 Bulletin 85/21**

(84) Designated Contracting States:
**AT BE CH DE FR GB IT LI LU NL SE**

(71) Applicant: **UNIVERSITY COLLEGE CARDIFF CONSULTANTS LTD.**
**P.O. Box 78**
**Cardiff, CF1 1XL(GB)**

(72) Inventor: **Jones, John Clive**
**3 Werfa Close, Abernent**
**Aberdare Mid-Glamorgan(GB)**

(72) Inventor: **Wheatley, Barry Ivan**
**28 Lochaber Street**
**Roath Park, Cardiff Wales(GB)**

(74) Representative: **Arthur, Bryan Edward et al,**
**Withers & Rogers 4 Dyer's Buildings Holborn**
**London EC1N 2JT(GB)**

(54) **Hydraulic digester.**

(57) A hydraulic digester comprising an inlet (7), a feed chamber (1), an anaerobic digestion chamber (2) and an effluent chamber (3), means (12) for conveying the feed from the feed chamber (1) to the anaerobic digestion chamber (2), means (16) for conveying digester material to the effluent chamber (3), means (17) for anaerobically returning material substantially comprising undigested solids from the effluent chamber (3) to the digestion chamber (2) and an outlet (8) for conveying the liquid from the effluent chamber (3). The passage (17) has a smaller diameter than the passage (16).

The feed chamber (1) has an inlet (7) disposed above the outlet (8) of the effluent chamber (3) to provide a feed pressure resulting in passage of material through the digester.

The gas collected in the space (14) leaves the digester at (13), digested solids are drained off at (4).

EP 0 142 307 A1

0142307

# HYDRAULIC DIGESTER

This invention relates to a hydraulic digester by which organic material may be anaerobically fermented to methane and carbon dioxide. Anaerobic digestion stabilizes and renders less noxious wastes and effluents from sewage works, agricultural systems as well as certain industrial concerns.

The essence of anaerobic treatment is the microbial conversion of organic matter via at least three separate reaction stages to gaseous products. This not only reduces the solids content of the original effluent or waste but also breaks down any putrescible matter.

Conventional anaerobic digestion systems consist of a feed tank or pit from which organic material is pumped or otherwise transported to a digestion tank. Frequently the feeding system to the digester operates on a continuous or semi-continuous basis.

The digester tank conventionally consists of an enclosed tank fitted with a system whereby the contents may be mixed and the temperature raised to and maintained at 30-40$^{\circ}$C or 50-60$^{\circ}$C. The microbial conversion in such a system is a slow process taking at least 10 days but more usually about 15 days (depending upon the actual material being digested). This means that for every 1m$^3$ of effluent treated it is usual to need at least 10m$^3$ of

digester tank volume. After digestion the liquid effluent is usually pumped to a reception tank, where solids may be recovered by various means.

These solids are rich in microbial matter and are therefore a rich source or protein which can be used for animal feed additives.

Some more sophisticated designs of digesters (known as contact digesters) achieve lower retention times by recycling some of this separated microbial biomass back to the beginning of the process with the intention of re-innoculating the feed with bacteria. However, the bacteria are exceptionally sensitive to the presence of oxygen and can be damaged by mechanical handling or shear. It is therefore believed that little of such recycled biomass is actually "active".

It is an object of this invention to provide a system whereby the active biomass in an effluent can be recycled effectively.

According to the invention we propose a hydraulic digester for digesting effluent organic material, comprising an anaerobic digestion chamber and an effluent chamber, means for conveying digester material from the digestion chamber to the effluent chamber and means for anaerobically returning material substantially comprising undigested solids from the effluent chamber to the digestion chamber, and an outlet for conveying the liquid from the effluent chamber.

The digester may have a single outer wall and the feed and effluent chambers may have a common wall.

In one digester according to the invention, the conveying means and the returning means may respectively comprise a first and a second passage and the second passage has a smaller diameter than the first passage.

The hydraulic digester may further comprise a feed chamber in communication with the digestion chamber and having an inlet, the inlet being disposed above the outlet of the effluent chamber to provide a feed pressure resulting in passage of material through the digester. The feed chamber may include a downwardly inclined wall for drainage and a valve-controlled passage located at or near the bottom of the said wall for providing said communication with the digestion chamber. Also, the digestion chamber may include a downwardly inclined wall for downward drainage of the contents therein with a drain located at or near the bottom of said wall for removal of solids from the digestion chamber, and the effluent chamber may include a downwardly inclined wall for downward drainage of the contents therein with the second passage located at or near the bottom of said wall.

The digestion chamber may include means for taking off biogas collected therein.

The valve-controlled passage from the feed chamber into the digestion chamber may comprise a tube with a bent end. Also, the second passage connecting the effluent chamber and the digestion chamber may comprise a tube with a bent end.

- 4 -

We therefore also propose according to this invention, a method of hydraulic digestion of effluent organic material comprising anaerobically digesting the material in one chamber, conveying the digested material into another chamber and returning the undigested solids from the other chamber into the digestion chamber for further digestion.

The method further comprises supplying effluent organic material under pressure to the digestion chamber, thereby imparting flow through the digestion chamber and the effluent chamber and creating a pressure head by virtue of the difference in levels of the input and output of the digester. The effluent organic material may be introduced into a feed chamber before supplying it to the digestion chamber. Digested solids may be drained off from the digestion chamber. Also, biogas collected in the digestion chamber may be taken off.

When the steps are carried out in chambers within a single housing, heat is shared between the chambers, which helps to improve the digestion process yield.

The digester can be operated in a temperature range of 30-65°C. The organic material is usually in solution or suspension.

The system thus minimizes hydraulic retention time whilst maximizing solids retention time so giving an optimized digester size for a particular waste. Excellent yields have been obtained according to this invention. The system has the following further advantages.

1.     The system operates on a hydraulic balance and can therefore be fed intermittently or even on a batch basis. The feed chamber system will convert this to a continuous or semi-continuous feeding regime.

2.     Less material is required for making one tank rather than three separate tanks.

3.     The inclusion of the feed and effluent chambers into the body of the system allows these two chambers to be economically insulated so reducing overall heat losses.

4.     The feed slurry is heated due to the proximity of the digester chamber prior to entering the digester chamber. This overcomes lost productivity due to thermal shocks.

5.     The volume of the feed chamber can be such that the feed is completely anaerobic before it enters the digestion chamber and it is often partially predigested because of the presence of microbes in the orginal feedstock.

6.     The effluent chamber is drainable to optimize settling and therefore optimize solids recycling to the digester chamber.

7.    The proximity of the effluent chamber to the digester chamber ensures minimal temperature changes, and therefore minimal thermal shock from the microbial matter that is recycled.

8.    The minimal temperature variation also means that post digestion also occurs allowing extra gas to be collected in this stage and further stabilization of the waste to take place.

9.    The settling and recycling of solids means that the final effluent from the total system has a solids content considerably lower than conventional systems.

10.    The recycling of substantially all of the undigested solids back to the digester allow a differential retention time to be achieved.  The average hydraulic retention time can be reduced to 3 days without digester failure whilst the solids retention time is probably well above 30 days. (In general the hydrolysis is a rate limiting one in anaerobic fermentation.  Therefore solids take much longer to ferment to the final gaseous products).

11.    The differential retention time means that significantly reduced average retention times can be achieved so reducing not only the digestion chamber volume but also the associated chambers.  In general a size reduction of a factor of 3 to 5 can be achieved, which means that the total system of feed, digester and effluent chambers is usually significantly smaller than that of a comparable conventional digester tank alone. As the cost of tanks is the major individual cost in digester systems this reduction in size is reflected in costs. The smaller size also means that there are reduced heat losses from the digester.

12.  The recycling of substantially all of the solids matter back to the digester chamber ensures that the digester solids content can be optimised It also means that the solids build up to a level where they can be extracted directly from the base of the digester chamber and used as a source of protein or nutrients.

13.  The configuration of the digester is such that the proximity of feed and effluent chambers simplifies heat recovery from the effluent.

14.  The configuration of the digester system is such that bio-gas can be produced at a pressure of at least 0.65 head of water. This removes the necessity for a gas compressor to move the gaseous product around.

15.  The fact that the gaseous products are produced under pressure disturbs the solubility equilibrium of the gases so that more carbon dioxide is dissolved in the liquid. (Methane being virtually insoluble). This gives a gaseous fuel product of significantly improved quality (typically 85% methane but up to 90% or more than 90% can be obtained compared to 75% methane in conventional systems).

The digester of this invention may be of any desired size and application.  It is of particular use on farms and a new head of material can be added daily from the farm waste accumulated during that day to provide fuel.  The typical size of a digester for a farm would be $100m^3$ but

could be as large as $7-8,000m^3$ for industrial digesters.


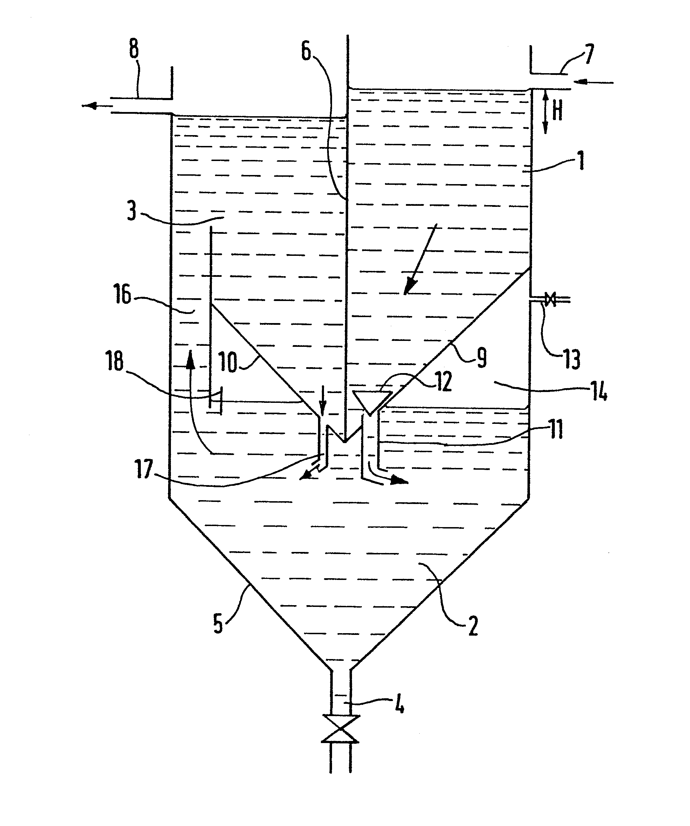

An embodiment of the digester system according to the invention will be described, with reference to the drawing,

which is a schematic diagram of the system.

The digester comprises three integral subsidiary chambers, a feed chamber 1, a digestion chamber 2 and an effluent chamber 3.  The digestion chamber 2 is disposed at the bottom of the digester beneath the feed and effluent chambers 1, 3 and has a drain 4 in the downwardly inclined bottom 5 wall for removal of settled solids. Preferably, the bottom

wall 5 of the digestion tank 2 should not be flat so that solids can be drained, for example it could be  dished.

The digestion chamber 2 is anaerobic whereas the feed and effluent chambers 3 can be open or closed to the atmosphere.  Means (not shown) is disposed in the digestion tank 2 for mixing the content. Mixing may be achieved by any of th conventional techniques.  In this example it takes the form o a recirculation pipe passing out and returning into the chamber.  The pipe travels via a heat exchanger for maintaining a minimum temperature in the digestion tank 2 of $35^{\circ}C$. Alternatively the mixing means could be an agitator or diffuser. The digestion tank must be kept below $65^{\circ}$ to maintain the digestion activity of the microbes.

The feed and effluent chambers 1,3 have a common central wall 6 and the feed inlet 7 is disposed above the effluent outlet 8 so that a head of liquid material can be formed with height H above the level of liquid in the effluent chamber 3 giving rise to a downward pressure. In use the pressure head results in the passage of liquid material of volume equal to that forming the head out of the feed chamber 1.

The feed and effluent chambers 1, 3 have downwardly inclined bottom walls 9. 10 for draining the liquor downwards. A tube 11 from the feed tank 1 extends into the digestion chamber 2 and a valve 12 in the tube controls flow from the feed chamber to the digestion chamber 2.

A gas outlet 13 is disposed near the top of the digestion chamber 2 in the space below the feed chamber for take - off of biogas which builds up in the annular space 14, above the level of liquid material in the digestion chamber 2.

A passage 16 leads from the digestion chamber 2 into the effluent chamber 3 and a re-innoculation tube 17 extends back into the digestion chamber 2 from the effluent chamber 3. The diameter of the passage 16 is greater than that of the re-innoculation tube 17 so as to provide one-way flow from the digestion chamber 2 into the effluent chamber 3 and from the latter back into the former. The ends of the tubes 11, 17 in the digestion chamber 2 are bent to guard against upward flow in the tubes.

A baffle 18 is provided near the outlet passage 16 to guard against scum building up in the passage 16 and impeding flow.

Digestion is carried out in the digester as follows. The feed chamber is loaded with the liquid material to be digested e. g. raw manure and more can be supplied as required. The material in the feed chamber obtains heat from the digester, particularly through the effluent chamber 3 via the wall 6 therebetween. The material flows into the digestion chamber 2 via valve 12 and the rate of flow of the material into the digester chamber is controlled by valve 12.

The fluid flowing into the digester displaces liquid through the passage 16 into the effluent chamber 3. Liquid flows out of the effluent chamber through the overflow outlet 8 until the level of material in the third chamber 3 is no greater than the level of the outlet 8. Settlement takes place in the third chamber 3 and solids drain down by gravity into the digestion
chamber 2 through the re-innoculation tube.

When the mixing means is switched off the solid matter
sinks to the bottom of the second tank 2 and can be
drained off through outlet 4 when required.

It is to be noted that the shapes of the chambers,
particularly the side walls, are not to be limited as
illustrated in the drawing but the sloping bottom walls of
the three chambers should be downwardly inclined, i. e
straight or curved, so as to allow downward flow out of
the respective chambers.

EXPERIMENTAL EXAMPLE

Trials have been conducted employing a digester as above described. The digester was run for twenty-one days plus an initial start-up period. Raw manure was fed in through the feed inlet at a rate of $0.6m^3$ per day but none was fed in on days 3, 15, 16, 17, 20 and 21. Biogas was taken off from the digestion tank via outlet 13. Analysis was carried out on days 2, 4, 5, 8, 9, 12, 15 and 17. The day 2 results depended on material fed in before day 1. The pH value of the effluent, the material in the digester and the effluent was fairly constant throughout the three weeks and respectively in the ranges 7.06-7.14, 7.41-7.71, 7.51-7.77.

The average retention time of material in the digestion chamber was 4.2 days. The experimental data are given in the table.

The methane content in the yielded biogas was measured by metering of the conductivity of the biogas. The results show very good methane contents of up to 90.5% (day 2) of total biogas output and typical values around 80%, (average 81.7%), notably 83.5 on the eighth day. Conventional methane recovery rates contents in biogas are generally lower than 75%. The biogas yield was fairly constant over the three weeks and was of the order of 700m$^3$ per kg of volatile (organics) solids. The percentage of input solids contained in the influent material was found by drying a known volume of the influent and re-weighing the dried matter. The percentage of input solids was typically in the range 0.51-1.77% T.S. This contained typically 63.83-84.61% V. S. determined by weighing the dried input material, heating the material to 600$^o$ celcius and weighing the residue. The difference in the initial and final weights comprises the weight of the volatile, or decomposable, solids.

The amount of fatty acid present in the influent was in the range 1500-5840 parts per million and this was obtained by finding the amount of acetic acid using standard calometric techniques.

The reduction in potential pollution was favourable, as shown by a reduction in chemical oxygen demand of up to 75% due to the good conversion to methane, notably 74.07% on the eighth day.

It was seen that of the order of one volume of biogas was obtained each day to one volume of the digestion chamber. The maximum ratio obtained was 2.69 on the 14th day. The volume of solid reduction per day was typically about 50% (A Figure of - 100% and-19.6% have been recorded for days 8 and 5 due to sampling problems). These results show that digesters according to this invention are highly effective in converting waste material into methane fuel. Such digesters can be widely employed for example in farms, sewage works or industry, and provide an alternative energy source.

| DAY | 1 | 2 | 3 | 4 | 5 |
|---|---|---|---|---|---|
| Retention time (days) | 3.3 | 3.3 | | 3.3 | 3.3 |
| volume fed (M3 per day) | .60 | .60 | .00 | .60 | .60 |
| temperature (Deg.C) | 36.1 | 37.1 | 36.8 | 38.0 | 36.0 |
| biogas produced (M3) | .65 | .39 | .39 | .75 | .76 |
| Methane produced (M3) | .54 | .35 | - | .61 | - |
| Biogas yield,M3/KG V.S. added | | | | 0.226 | 0.31 |
| Biogas yield,M3/KG V.S. destroy | | | | 0.336 | -1.822 |
| Vol.fed per digester Vol.(PC) | 30.0 | 30.0 | | 30.0 | 30.0 |
| Biogas/digester volume | .324 | .196 | .196 | .373 | .381 |
| Methane per cent. | 83.5 | 90.5 | | 81.5 | |
| Volatile Fatty Acid (PPM) | | | | | |
| Influent | | 1500 | | 2520 | 2920 |
| Contents | | 1380 | | 800 | 940 |
| Effluent | | 1060 | | .640 | 700 |
| Reduction (Per Cent) | | 29.33 | | 74.60 | 76.03 |
| Ammonia Concentration (PPM) | | | | | |
| Influent | | | | | |
| Contents | | | | | |
| Effluent | | | | | |
| Reduction (Per Cent) | | | | | |
| Total Solids (Per Cent) | | | | | |
| Influent | | 0.41 | | 0.65 | 0.56 |
| Contents | | 3.60 | | 3.96 | 4.59 |
| Effluent | | 0.20 | | 0.27 | 0.67 |
| Reduction (Per Cent) | | 51.22 | | 58.46 | -19.64 |
| Volatile Solids (Per Cent) | | | | | |
| Influent | | | | 84.61 | 73.21 |
| Contents | | | | 74.24 | 65.57 |
| Effluent | | | | 66.66 | 71.61 |
| Reduction (Per Cent) | | | | 21.21 | 2.19 |
| Chemical Oxygen Demand (PPM) | | | | | |
| Influent | | 8500 | | 12000 | |
| Contents | | 12500 | | 12500 | |
| Effluent | | 7000 | | 6000 | |
| Reduction (Per Cent) | | 17.65 | | 50.00 | |
| Loading Rate (KG/M3/Day) | | 2.550 | | 3.600 | |
| AMT. destroyed (KG/M3/Day) | | 0.450 | | 1.800 | |
| PH | | | | | |
| Influent | | 7.19 | | 7.19 | 7.19 |
| Contents | | 7.71 | | 7.67 | 7.57 |
| Effluent | | 7.77 | | 7.76 | 7.69 |

| DAY | 6 | 7 | 8 | 9 | 10 |
|---|---|---|---|---|---|
| Retention time (days) | 3.3 | 3.3 | 3.3 | 3.3 | 3.3 |
| volume fed (M3 per day) | .60 | .60 | .60 | .60 | .60 |
| temperature (Deg C) | 35.5 | 36.1 | 35.0 | - | 35.0 |
| biogas produced (M3) | 1.11 | 1.48 | 1.66 | 1.64 | 1.75 |
| Methane produced (M3) | .91 | 1.20 | 1.38 | 1.35 | - |
| Biogas yield,M3/KG V.S. added | | | 0.657 | 0.91 | |
| Biogas yield,M3/KG V.S. destroy | | | -0.657 | 27.319 | |
| Vol.fed per digester Vol. (P.C) | 30.0 | 30.0 | 30.0 | 30.0 | 30.0 |
| Biogas/digester volume | .555 | .740 | .827 | .819 | .874 |
| Methane per cent. | 81.5 | 81.0 | 83.5 | 82.5 | |
| **Volatile Fatty Acid (PPM)** | | | | | |
| Influent | | | 3280 | | |
| Contents | | | 1100 | 1200 | |
| Effluent | | | 800 | 1100 | |
| Reduction (Per Cent) | | | 75.61 | | |
| **Ammonia Concentration (PPM)** | | | | | |
| Influent | | | 3650 | | |
| Contents | | | 1800 | | |
| Effluent | | | 2850 | | |
| Reduction (Per Cent) | | | 21.92 | | |
| **Total Solids (Per Cent)** | | | | | |
| Influent | | | 0.57 | 0.47 | |
| Contents | | | 2.14 | 4.11 | |
| Effluent | | | 1.15 | 0.46 | |
| Reduction (Per Cent) | | | -101.75 | 2.13 | |
| **Volatile Solids (Per Cent)** | | | | | |
| Influent | | | 73.68 | 63.83 | |
| Contents | | | 65.42 | 67.15 | |
| Effluent | | | 73.04 | 67.39 | |
| Reduction (Per Cent) | | | 0.87 | 5.58 | |
| **Chemical Oxygen Demand (PPM)** | | | | | |
| Influent | | | 27000 | | |
| Contents | | | 14000 | | |
| Effluent | | | 7000 | | |
| Reduction (Per Cent) | | | 74.07 | | |
| Loading Rate (KG/M3/Day) | | | 8.100 | | |
| AMT. destroyed (KG/M3/Day) | | | 6.000 | | |
| **PH** | | | | | |
| Influent | | | 7.09 | | |
| Contents | | | 7.61 | 7.67 | |
| Effluent | | | 7.74 | 7.77 | |

| DAY | 11 | 12 | 13 | 14 | 15 |
|---|---|---|---|---|---|
| Retention time (days) | 3.3 | 3.3 | 3.3 | 3.3 | - |
| volume fed (M3 per day) | .60 | .60 | .60 | .60 | .00 |
| temperature (Deg.C) | 36.0 | 34.0 | 37.5 | - | - |
| biogas produced (M3) | 2.05 | 2.02 | 3.00 | 5.38 | 2.80 |
| Methane produced (M3) | 1.66 | 1.63 | 2.41 | 4.25 | 2.27 |
| Biogas yield, M3/KG V.S. added | | 0.242 | | | |
| Biogas yield, M3/KG V.S. destroy | | 0.398 | | | |
| Vol. fed per digester Vol. (PC) | 30.0 | 30.0 | 30.0 | 30.0 | |
| Biogas/digester volume | 1.025 | 1.009 | 1.498 | 2.69 | 1.402 |
| Methane per cent. | 81.0 | 81.0 | 80.5 | 79.0 | 81.0 |
| Volatile Fatty Acid (PPM) | | | | | |
| Influent | | 3720 | | | 5840 |
| Contents | | 1260 | | | 1820 |
| Effluent | | 1340 | | | 1420 |
| Reduction (Per Cent) | | 63.98 | | | 75.68 |
| Ammonia Concentration (PPM) | | | | | |
| Influent | | | | | |
| Contents | | | | | |
| Effluent | | | | | |
| Reduction (Per Cent) | | | | | |
| Total Solids (Per Cent) | | | | | |
| Influent | | 1.77 | | | |
| Contents | | 1.77 | | | |
| Effluent | | 0.91 | | | |
| Reduction (Per Cent) | | 48.59 | | | |
| Volatile Solids (Per Cent) | | | | | |
| Influent | | 78.63 | | | |
| Contents | | 61.49 | | | |
| Effluent | | 60.08 | | | |
| Reduction (Per Cent) | | 23.59 | | | |
| Chemical Oxygen Demand (PPM) | | | | | |
| Influent | | 21000 | | | |
| Contents | | 29500 | | | |
| Effluent | | 8500 | | | |
| Reduction (Per Cent) | | 59.52 | | | |
| Loading Rate (KG/M3/Day) | | 6.300 | | | |
| AMT. destroyed (KG/M3/Day) | | 3.750 | | | |
| PH | | | | | |
| Influent | | 7.06 | | | 7.11 |
| Contents | | 7.41 | | | 7.51 |
| Effluent | | 7.51 | | | 7.62 |

| DAY | 16 | 17 | 18 | 19 | 20 | 21 |
|---|---|---|---|---|---|---|
| Retention time (days) | | | 3.3 | 3.3 | | |
| volume fed (M3 per day) | .00 | .00 | .60 | .60 | .00 | .00 |
| temperature (Deg.C) | 29.0 | 29.0 | 38.1 | 36.2 | - | - |
| biogas produced (M3) | 2.86 | 2.89 | .00 | 4.46 | .99 | .99 |
| Methane produced (M3) | 2.32 | 2.27 | - | 3.54 | - | - |
| Biogas yield, M3/KG V.S. added | | | | | | |
| Biogas yield, M3/KG V.S. destroy | | | | | | |
| Vol.fed per digester Vol. (PC) | | | 30.0 | 30.0 | | |
| Biogas/digester volume | 1.429 | 1.446 | .0 | 2.228 | .493 | .493 |
| Methane per cent. | 81.0 | 78.5 | | 79.5 | | |
| Volatile Fatty Acid (PPM) | | | | | | |
| Influent | | | | | | |
| Contents | | 880 | | | | |
| Effluent | | | | | | |
| Reduction (Per Cent) | | | | | | |
| Ammonia Concentration (PPM) | | | | | | |
| Influent | | | | | | |
| Contents | | | | | | |
| Effluent | | | | | | |
| Reduction (Per Cent) | | | | | | |
| Total Solids (Per Cent) | | | | | | |
| Influent | | | | | | |
| Contents | | 2.98 | | | | |
| Effluent | | | | | | |
| Reduction (Per Cent) | | | | | | |
| Volatile Solids (Per Cent) | | | | | | |
| Influent | | | | | | |
| Contents | | | | | | |
| Effluent | | | | | | |
| Reduction (Per Cent) | | | | | | |
| Chemical Oxygen Demand (PPM | | | | | | |
| Influent | | | | | | |
| Contents | | | | | | |
| Effluent | | | | | | |
| Reduction (Per Cent) | | | | | | |
| Loading Rate (KG/M3/Day) | | | | | | |
| AMT. destroyed (KG/M3/Day) | | | | | | |
| PH | | | | | | |
| Influent | | | | | | |
| Contents | | | | | | |
| Effluent | | | | | | |

CLAIMS:

1. A hydraulic digester for digesting effluent organic material, comprising an anaerobic digestion chamber and an effluent chamber, means for conveying digester material from the digestion chamber to the effluent chamber and means for anaerobically returning material substantially comprising undigested solids from the effluent chamber to the digestion chamber, and an outlet for conveying the liquid from the effluent chamber.

2. A hydraulic digester according to claim 1, wherein the conveying means and the returning means respectively comprise a first and a second passage and the second passage has a smaller diameter than the first passage.

3. A hydraulic digester according to claim 1 or 2, comprising a single housing.

4. A hydraulic digester according to claim 1, 2 or 3, further comprising a feed chamber in communication with the digestion chamber and having an inlet, the inlet being disposed above the outlet of the effluent chamber to provide a feed pressure resultant in passage of material through the digester.

5. A hydraulic digester according to claim 4, wherein the feed chamber and the effluent chamber have a common wall.

6. A hydraulic digester according to any one of claims 1 to 5, wherein one or more of the feed chamber, the digestion chamber and the effluent chamber has a downwardly inclined wall for downward drainage of the contents therein.

7. A hydraulic digester according to claim 6, wherein the feed chamber includes a valvecontrolled passage located at or near the bottom of the said wall for providing said communication with the digestion chamber.

8.        A hydraulic digester according to claim 6 or 7, wherein the digestion chamber includes a drain located at or near the bottom of said wall for removal of solids from the digestion chamber.

9.        A hydraulic digester according to claim 6, 7, or 8, wherein the second passage is located at or near the bottom of said wall in the effluent chamber.

10.       A hydraulic digester according to any preceding claim, wherein the digestion chamber includes means for taking off biogas collected therein.

11.       A hydraulic digester according to any one of claims 7 to 10, wherein the valve-controlled passage from the feed chamber into the digestion chamber comprises a tube with a bent end.

12.       A hydraulic digester according to any one of claims 2 to 11, wherein the second passage connecting the effluent chamber and the digestion chamber comprises a tube with a bent end.

13.       A method of hydraulic digestion of effluent organic material comprising anaerobically digesting the material in one chamber, conveying the digested material into another chamber and returning the undigested solids from the other chamber into the digestion chamber for further digestion.

14.       A method according to claim 13, further comprising supplying effluent organic material under pressure to the digestion chamber, thereby imparting flow through the digestion chamber and the effluent chamber.

15.       A method according to calim 14, comprising creating a pressure head by virtue of the difference in levels of the input and the output of the digester.

16. A method according to claim 14 or 15, comprising introducing the effluent organic material into a feed chamber before supplying it to the digestion chamber.

17. A method according to claim 13 or 14, further comprising draining off digested solids from the digestion chamber.

18. A method according to claim 13, 14 or 15, further comprising taking off biogas collected in the digestion chamber.

19. A method according to any preceding claim, wherein the steps are carried out so that heat is shared between the chambers.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A- 773 124 (DORR-OLIVER)<br><br>* page 7, claim 1; page 3, line 31 - page 4, line 13 * | 1,2,6 8-10, 13,18 | C 02 F 3/28 |
| A | DE-C- 246 159 (F. MONDRION)<br>* page 1, line 53 - page 2, line 18 * | 4,15 | |
| A | DE-C- 329 766 (F. RÜHL)<br>* figure 1 * | 11,12 | |
| A | FR-A-1 518 723 (B. VIAZZI)<br>* whole document * | 1,4,5 | |

TECHNICAL FIELDS
SEARCHED (Int. Cl.4)

C 02 F
C 12 M

The present search report has been drawn up for all claims

| Place of search | Date of completion of the search | Examiner |
|---|---|---|
| THE HAGUE | 29-01-1985 | TEPLY J. |